# EUROPEAN PATENT SPECIFICATION

(11) **EP 1 481 886 B1**
(45) Date of publication and mention of the grant of the patent: **10.09.2008**
(21) Application number: 04076525.7
(22) Date of filing: 24.05.2004
(51) Int. Cl.: B62K 25/28, B62K 11/04

(54) **Coupling system between frame and rear engine-suspension group of a motor vehicle**
Kupplungssystem zwischen Rahmen und Hinteraufhängung/motor Gruppe eines Kraftfahrzeugs
Système de couplage entre cadre et ensemble de moteur/suspension arrière pour véhicule

(30) Priority: 26.05.2003 IT MI20031053
(43) Date of publication of application: 01.12.2004
(73) Proprietor: PIAGGIO & C. S.p.A., 56025 Pontedera (Pisa) (IT)
(72) Inventor: Bagnoli, Alessandro, 56030 Perignano di Lari Pisa (IT)
(74) Representative: De Gregori, Antonella

(56) References cited:
- EP-A- 0 737 615
- EP-A- 1 055 594
- EP-A- 1 186 526
- EP-A- 1 306 296
- US-A- 4 373 602

## Description

The present invention concerns a coupling system between frame and rear engine-suspension group of a motor vehicle.

In greater detail, the invention concerns a system of said type, researched and realised in particular to reduce the passage of vibrations produced, for example, by a spark-ignition engine, and the torsional effects with respect to the axial plane of motion, but which can be used for any system or means equivalent to the one indicated.

Hereafter, the description shall focus upon application to a motorcycle, but it is clear how it does not have to be considered limited to this specific use.

It is well known that currently the performance of propellants of motorcycles is increasing very quickly. This involves the need to give, at the design stage, particular attention to the equipping of such means with sophisticated systems and devices, suitable for the safety of the driver and the comfort of the ride itself. Indeed, the acceleration capability and the road-holding capability when cornering and on demanding road sections involve ever greater stresses between the frame and the engine group and on the frame itself.

Currently, devices are known that allow the damping of vibrations, such as tension rods, generally associated with buffers, inserted in many contact points, which allow a reaction to the stresses between the various parts that make up the motorcycle, which may be stressed and/or stress each other, to be applied. Amongst the aforementioned parts most involved in this type of problems, we must consider in particular the rear fork, with which the rear driving-wheel is coupled, the motorcycle frame and the engine group.

Moreover, in the points of contact, devices are also foreseen that allow an elastic coupling, also known as "silentblock", which allow the vibrations to be damped effectively.

However, currently the systems listed above, following the increase in propulsion power, do not allow an effective blocking of the passage of vibrations from the engine to the frame.

It is also known how the basic parts of a motorcycle, that is the engine group, the rear fork together with the driving-wheel, and the frame thereof, are stresses independently and that it would therefore be suitable, as well as to attenuate the propagation of vibrations from the engine to the frame, also to make the overall structure equipped with suitable rigidity, which allows the torsional stresses to which the various parts of the motorcycle are subjected to be reduced.

Document EP-A-1 186 526 discloses a coupling system between frame and rear engine-suspension group of a motorcycle according to the preamble of claim 1, wherein a plurality of mutually parallel connection elements between frame and engine are provided.

Document EP-A-0 737 615 discloses a swing arm structure for supporting an axle of a motorcycle rear wheel, the swing arm being connected to the motorcycle engine through a pair of bolts.

In light of the above, it is clear that there is a need to be able to have a system like the one according to the present invention that allows a frame - fork/wheel - engine group connection to be created that minimises the propagation of vibrations between the engine group and the frame.

Therefore, the specific object of the present invention is achieved with a coupling system between frame and rear engine-suspension group of a motor vehicle as described in claim 1.

Further characteristics of the invention are illustrated in the subsequent claims.

The present invention shall now be described for indicating but not limiting purposes, according to its preferred embodiments, with particular reference to the figures of the attached drawings, in which:
Figure 1 shows a first perspective view of the engine-suspension-rear wheel group of a motorcycle comprising the system according to the present invention;
Figure 2 is a side view of the engine-suspension-rear wheel group of 1;
Figure 3 shows a perspective view of the rear engine-suspension group of a motorcycle comprising the system according to the present invention; and
Figure 4 shows a perspective view of a particular alternative attachment between damper and fork.

To better understand the present invention, hereafter we describe the operating modes of the preferred embodiment, with analogous modes being valid for other possible embodiments.

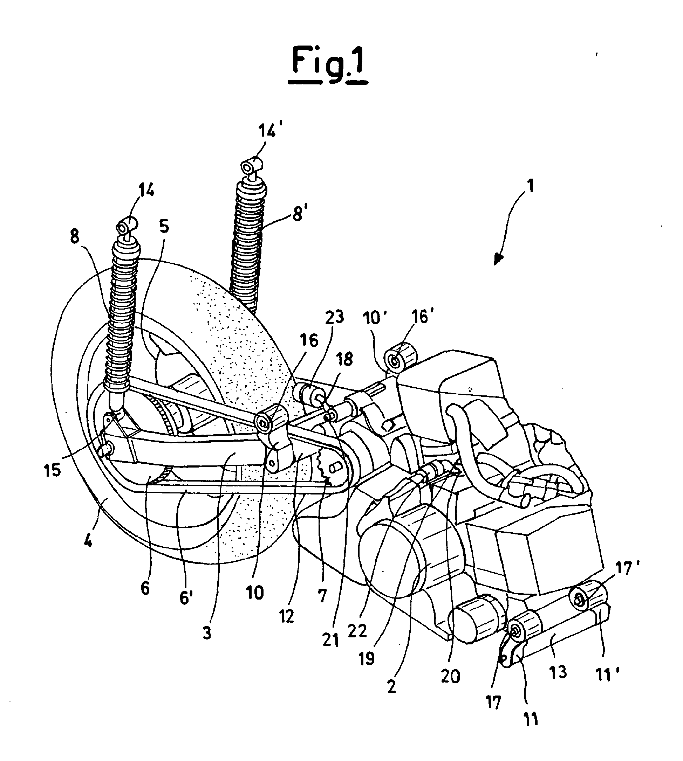

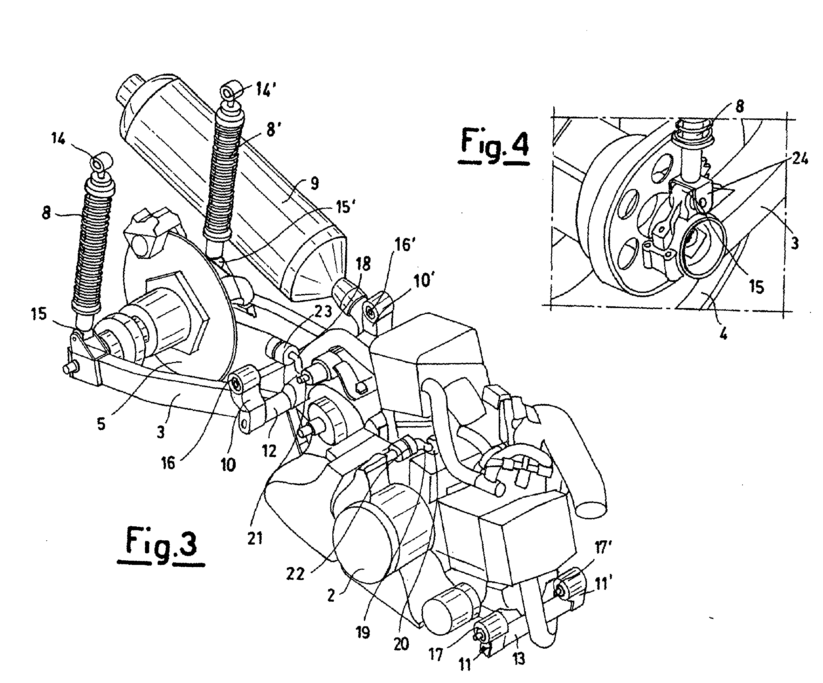

With reference to the attached figures it is possible to observe an engine-suspension group 1 of a motorcycle with (figures 1 and 3) and without (figure 3) a wheel 4, comprising the solution of the present invention. In particular, said group comprises an engine 2, to which the fork 3 is connected, on which the rear wheel 4 is mounted, together with the brake disc 5. On the axis of the rear wheel 4 a sprocket 6 is foreseen, connected through a driving belt 6' to a pulley 7. Two rear dampers 8 and 8' and a silencer 9 are also foreseen.

The frame of the motorcycle, not shown in the figures, is applied onto the engine-suspension group 1. Said frame is connected to said rear engine-suspension group 1 and to the fork 3 through two pairs of arms 10, 10' and 11, 11', respectively arranged at the rear and front of said engine 2, coupled together through two transversal cylindrical elements 12, for arms 10, 10', and 13 for arms 11, 11'.

On the axis of the transversal cylindrical element 12 the pivot of the rear wheel 3 is fixed, which rotates on cases with rollers or ball bearings contained in said transversal cylinder 12. The rotation of the fork 3 is controlled by the pair of dampers 8 and 8' fixed to the frame and to the fork 3 through silentblock 14, 14' and 15, 15', contained in said pair of dampers 8 and 8'.

Alternatively, silentblock 15, 15', as shown in figure 4, can be housed directly on the fork 3. In this case the rear dampers 8 and 8' foresee a clevis 24 that fixes to the silentblock 15, 15' and then to the fork 3.

Both of the pairs of arms 10, 10' and 11, 11' are pivoted on the frame through silentblocks 16, 16' and 17, 17' contained in them, or else through means which in any case allow rotation, like for example bearings. The silentblocks 16, 16' and 17, 17' allow an elastic connection with respect to the frame.

Further connections between the frame and the engine-suspension group 1 are foreseen, which comprise a longitudinal tension rod 18 and a transversal tension rod 19. The movements of the rear engine-suspension group 1, in the vertical and horizontal transversal planes, are limited by the presence of said tension rods 18 and 19 and by the axial and radial rigidity of the silentblocks 16, 16' and 17, 17' contained in the arms 10, 10' and 11, 11', and 14, 14' and 15, 15' contained in the dampers 8 and 8'. Said tension rods are also connected to the engine through silentblocks 20 and 21 and to the frame with two pairs of buffers 22 and 23. The silentblock 20 with axis perpendicular to the pivots of the arms 10, 10' and 11, 11' is fixed to the engine 2 in the middle part of its axis. The reaction on the frame is assigned to a side bracket (not shown in the figure) that is gripped by the pair of buffers 22 and by the transversal tension rod 19, which work in opposition.

The different radial rigidities, axial and torsional, of the silentblocks 20 and 21 and the longitudinal 18 and transversal 19 tension rods allow the engine to be left the freedom of movement necessary to limit the passage of vibrations and allow the movements that influence the driving of the vehicle to be counteracted. The rear dampers 8 and 8' are fixed onto the fork 3 at the rear wheel and remain almost vertical during their travel so as to reduce the effects of the forces of the rear suspension on the arms 10, 10' and 11, 11', and on the preload of the pair of buffers 23 of the longitudinal tension rod 18. The arms 10, 10' and 11, 11', which support the engine, are orientated so that the weight of the engine 2 does not influence the preload of said pair of buffers 23 of the longitudinal tension rod 18.

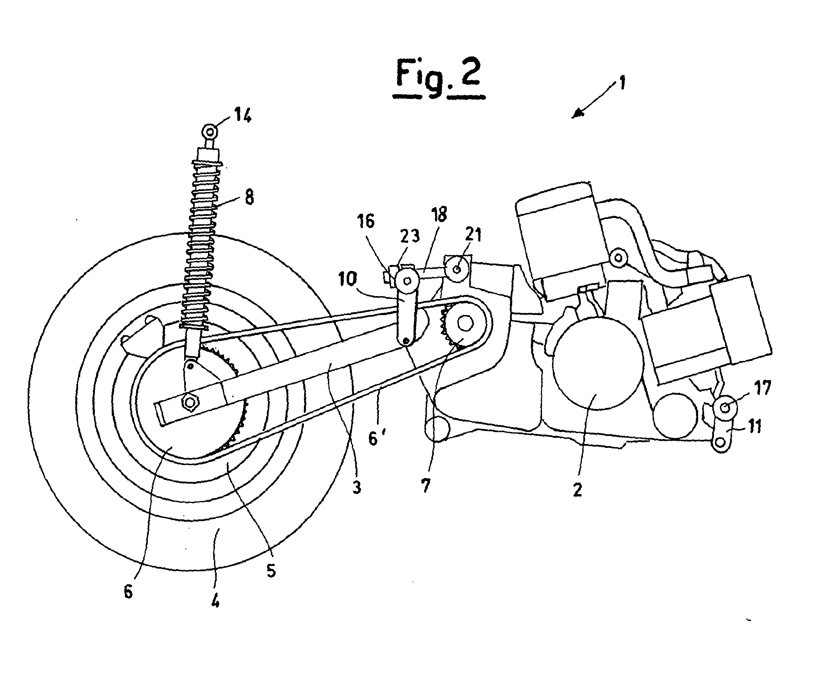

Considering, in particular, figure 2, it is possible to observe the side view of the engine-suspension group 1, comprising the wheel 4. In particular, the arms 10 and 11, the longitudinal tension rod 18 and the pair of buffers 23 can be seen.

Through this figure it can be seen that the frame, the engine 2 and the arms 10, 10' and 11, 11' form, in the longitudinal plane of the vehicle, a quadrilateral the arms 10, 10' and 11, 11' of which are substantially vertical sides. The engine 2 can oscillate in the longitudinal plane but is countered by the longitudinal tension rod 18 and by the torsional rigidity of the silentblocks 16, 16' and 17, 17' and 14, 14' and 15, 15' contained in the arms and in the dampers 8 and 8'. The longitudinal tension rod 18 allows small movements of the engine due to vibrations but limits the oscillations deriving from acceleration of the vehicle. The reaction on the frame by said longitudinal tension rod 18 is assigned to a bracket (not shown) that is gripped by the pair of buffers 23.

Thanks to the absence of elastic elements in the connection between the fork and the engine, the rear engine-suspension group keeps the axes of the pinion 7 coming out from the engine 2, of the transversal cylindrical pivot element 12 and of the rear wheel 4 parallel in all of the travel of the dampers 8, 8'. The aforementioned parallelism of the axes improves the work of the end transmission from the driving pinion 7 to the rear wheel 4, which can be realised with a toothed belt 6 or even with a chain with rollers.

Based upon the previous description, it can be observed that the fundamental advantage of the present invention is that of reducing the passage of vibrations from the engine to the vehicle. In particular, the engine and the frame do not have rigid fitting points, but each connection point has an articulation. The connections to the frame of the rear engine-suspension group are not carried out directly through buffers or silentblock, but each attachment is carried out through arms or connecting rods.

The present invention has been described for illustrative but not limiting purposes, according to its preferred embodiments, but it should be understood that variations and/or modifications can be made by men skilled in the art without for this reason departing from the relative scope of protection, as defined by the attached claims.

## Claims

1. Coupling system between frame and rear engine-suspension group of a motor vehicle, said motor vehicle comprising a frame, a fork (3) coupled at one end with said rear engine-suspension group (1) and at the other end with at least one wheel (4), said system comprising rigid connection elements (10, 10' and 11, 11') between said frame and said rear engine-suspension group (1), said rigid connection elements (10, 10' and 11, 11') being arranged at the front and rear of the engine (2) and being coupled with said frame by means of first coupling means (16, 16' and 17, 17') and with said rear engine-suspension group (1) by means of second coupling means, **characterised in that** at least one transversal coupling (19) and/or at least one longitudinal coupling (18) are furthermore provided between said frame and said engine (2), each of said at least one transversal coupling (19) and of said at least one longitudinal coupling (18) comprising a tension rod.

2. System according to claim 1, **characterised in that** said tension rod of said at least one transversal coupling (19) is connected to said frame through a pair of buffers (22).

3. System according to claims 1 and 2, **characterised in that** said tension rod of said at least one transversal coupling (19) is coupled with a silentblock (20) arranged on said engine (2).

4. System according to claim 1, **characterised in that** said tension rod of said at least one longitudinal coupling (18) is connected to said frame through a pair of buffers (23).

5. System according to claims 1 and 4, **characterised in that** said tension rod of said at least one longitudinal coupling (18) is coupled with a silentblock (21) on said engine (2).

6. System according to claim 1, **characterised in that** said connection elements (10, 10' and 11, 11') comprise arms.

7. System according to claim 6, **characterised in that** said connection elements (10, 10' and 11, 11') comprise two pairs of arms.

8. System according to claim 7, **characterised in that** each of said pairs of arms are connected through a transversal cylindrical element (12, 13).

9. System according to claim 1, **characterised in that** said first coupling means (16, 16' and 17, 17') and said second coupling means comprise elements that allow rotation.

10. System according to claim 9, **characterised in that** said elements that allow rotation comprise silentblocks or bearings.

11. System according to claim 1, **characterised in that** said fork (3) is connected to the frame by means of damping means (8, 8').

12. System according to claim 11, **characterised in that** said fork (3) incorporates connection silentblocks (14, 14' and 15, 15') at ends of said damping means (8, 8') equipped with clevis.

13. System according to claim 11, **characterised in that** said fork (3) is connected to connection silentblocks 14, 14' and 15, 15') incorporated in ends of said damping means (8, 8').

14. System according to claim 11, **characterised in that** said damping means (8, 8') comprise two dampers.

15. System according to claim 12, **characterised in that** said damping means (8, 8') remain substantially vertical relative to the ground during their travel.

## Patentansprüche

1. Verbindungssystem zwischen Rahmen und hinterer Motoraufhängungsgruppe eines Motorfahrzeugs, wobei das genannte Motorfahrzeug einen Rahmen, eine Gabel (3), welche an einem Ende mit der genannten hinteren Motoraufhängungsgruppe (1) und am anderen Ende mit wenigsten einem Rad (4) verbunden ist, umfasst, und wobei das genannte System starre Verbindungsmittel (10, 10' und 11, 11') zwischen dem genannten Rahmen und der genannten hinteren Motoraufhängungsgruppe (1) umfasst, wobei die starren Verbindungsmittel (10, 10' und 11, 11') an der Vorderseite und der Hinterseite des Motors (2) angeordnet sind und mit dem genannten Rahmen mittels erster Verbindungselemente (16, 16' und 17, 17') und mit der genannten hinteren Motoraufhängungsgruppe (1) mittels zweiter Verbindungselemente verbunden sind, **dadurch gekennzeichnet, dass** weiters wenigstens ein querlaufendes Kupplungsstück (19) und/oder wenigstens ein längslaufendes Kupplungsstück (18) zwischen dem genannten Rahmen und dem genannten Motor (2) vorgesehen sind, wobei jedes des genannten wenigstens einen querlaufenden Kupplungsstückes (19) und des genannten wenigstens einen längslaufenden Kupplungsstückes (18) eine Zugstange aufweist.

2. System nach Anspruch 1, **dadurch gekennzeichnet, dass** die genannte Zugstange des genannten wenigstens einen querlaufenden Kupplungsstückes (19) über ein Paar von Dämpfern (22) mit dem genannten Rahmen verbunden ist.

3. System nach Anspruch 1 und 2, **dadurch gekennzeichnet, dass** die genannte Zugstange des genannten wenigstens einen querlaufenden Kupplungsstückes (19) mit einem Gummilager (20), der an dem genannten Motor (2) angebracht ist, verbunden ist.

4. System nach Anspruch 1, **dadurch gekennzeichnet, dass** die genannte Zugstange des genannten wenigstens einen längslaufenden Kupplungsstückes (18) über ein Paar von Dämpfern (23) mit dem genannten Rahmen verbunden ist.

5. System nach Anspruch 1 und 4, **dadurch gekennzeichnet, dass** die genannte Zugstange des genannten wenigstens einen längslaufenden Kupplungsstückes (18) mit einem Gummilager (21) an den genannten Motor (2) gekoppelt ist.

6. System nach Anspruch 1, **dadurch gekennzeichnet, dass** die genannten Verbindungselemente (10, 10' und 11, 11') Ausleger umfassen.

7. System nach Anspruch 6, **dadurch gekennzeichnet, dass** die genannten Verbindungselemente (10, 10' und 11, 11') zwei Paare von Auslegern umfassen.

8. System nach Anspruch 7, **dadurch gekennzeichnet, dass** jedes der genannten Paare von Auslegern durch ein querstehendes, zylindrisches Element (12, 13) verbunden sind.

9. System nach Anspruch 1, **dadurch gekennzeichnet, dass** die genannten ersten Verbindungselemente (16, 16' und 17, 17') und die genannten zweiten Verbindungsmittel Elemente umfassen, die eine Rotation zulassen.

10. System nach Anspruch 9, **dadurch gekennzeichnet, dass** die Elemente, die eine Rotation zulassen, Gummilager oder Lager umfassen.

11. System nach Anspruch 1, **dadurch gekennzeichnet, dass** die genannte Gabel (3) mit Dämpfungsmitteln (8, 8') mit dem Rahmen verbunden ist.

12. System nach Anspruch 11, **dadurch gekennzeichnet, dass** die genannte Gabel (3) Verbindungs-Gummilager (14, 14' und 15, 15') an den Enden der genannten Dämpfungsmittel (8, 8') umfasst, die mit einem Bohrloch versehen sind.

13. System nach Anspruch 11, **dadurch gekennzeichnet, dass** die genannte Gabel (3) mit den Verbindungs-Gummilager (14, 14' und 15, 15'), die an den Enden der genannten Dämpfungsmittel (8, 8') angebracht sind, verbunden ist.

14. System nach Anspruch 11, **dadurch gekennzeichnet, dass** die genannten Dämpfungsmittel (8, 8') zwei Dämpfer aufweisen.

15. System nach Anspruch 12, **dadurch gekennzeichnet, dass** die genannten Dämpfungsmittel (8, 8') während ihrer Bewegung im wesentlichen lotrecht zum Boden bleiben.

## Revendications

1. Système de couplage entre cadre et ensemble moteur/suspension arrière d'un véhicule automobile, ledit véhicule automobile comprenant un cadre, une fourche (3) couplée à une extrémité audit ensemble moteur/ suspension arrière (1), et à l'autre extrémité à au moins une roue (4), ledit système comprenant des éléments de connexion rigides (10, 10' et 11, 11') entre ledit cadre et ledit ensemble moteur/suspension arrière (1), lesdits éléments de connexion rigides (10, 10' et 11, 11') étant disposés à l'avant et à l'arrière du moteur (2) et étant couplés audit cadre au moyen de premiers moyens de couplage (16, 16' et 17, 17') et audit ensemble moteur/suspension arrière (1) au moyen de seconds moyens de couplage, **caractérisé en ce qu'**au moins un élément de couplage transversal (19) et/ou au moins un élément de couplage longitudinal (18) sont de plus positionnés entre ledit cadre et ledit moteur (2), chacun desdits au moins un élément de couplage transversal (19) et au moins un élément de couplage longitudinal (18) comprenant une tige de tension.

2. Système selon la revendication 1, **caractérisé en ce que** ladite tige de tension dudit au moins un élément de couplage transversal (19) est reliée audit cadre à travers une paire de tampons (22).

3. Système selon les revendications 1 et 2, **caractérisé en ce que** ladite tige de tension dudit au moins un élément de couplage transversal (19) est couplée à un silentbloc (20) disposé sur ledit moteur (2).

4. Système selon la revendication 1, **caractérisé en ce que** ladite tige de tension dudit au moins un élément de couplage longitudinal (18) est reliée audit cadre à travers une paire de tampons (23).

5. Système selon les revendications 1 et 4, **caractérisé en ce que** ladite tige de tension dudit au moins un élément de couplage longitudinal (18) est couplée à un silentbloc (21) situé sur ledit moteur (2).

6. Système selon la revendication 1, **caractérisé en ce que** lesdits éléments de connexion (10, 10' et 11, 11') comprennent des bras.

7. Système selon la revendication 6, **caractérisé en ce que** lesdits éléments de connexion (10, 10' et 11, 11') comprennent deux paires de bras.

8. Système selon la revendication 7, **caractérisé en ce que** chacune desdites paires de bras est reliée à travers élément cylindrique transversal (12, 13).

9. Système selon la revendication 1, **caractérisé en ce que** lesdits premiers moyens de couplage 16, 16' et 17, 17') ainsi que lesdits seconds moyens de couplage comprennent des éléments qui permettent la rotation.

10. Système selon la revendication 9, **caractérisé en ce que** lesdits éléments qui permettent la rotation comprennent des silentblocs ou des paliers.

11. Système selon la revendication 1, **caractérisé en ce que** ladite fourche (3) est reliée au cadre au moyen de moyens d'amortissement (8, 8').

12. Système selon la revendication 11, **caractérisé en ce que** ladite fourche (3) intègre des silentblocs de connexion (14, 14' et 15, 15') à des extrémités desdits moyens d'amortissement (8, 8') équipées de chapes.

13. Système selon la revendication 11, **caractérisé en ce que** ladite fourche (3) est reliée à des silentblocs de connexion (14, 14' et 15, 15') intégrés dans des extrémités desdits moyens d'amortissement (8, 8').

14. Système selon la revendication 11, **caractérisé en ce que** lesdits moyens d'amortissement (8, 8') comprennent deux amortisseurs.

15. Système selon la revendication 12, **caractérisé en ce que** lesdits moyens d'amortissement (8, 8') restent sensiblement verticaux par rapport au sol pendant leur course.
